# NEUE EUROPÄISCHE PATENTSCHRIFT

(11) **EP 2 163 524 B2**
(45) Veröffentlichungstag und Bekanntmachung des Hinweises auf die Entscheidung über den Einspruch: **11.07.2018**
(45) Hinweis auf die Patenterteilung: 14.12.2011
(21) Anmeldenummer: 08016104.5
(22) Anmeldetag: 12.09.2008
(51) Int. Cl.: C02F 3/30

(54) **Verfahren zur Behandlung von ammoniumhaltigem Abwasser**
Method for treating wastewater containing ammonium
Procédé de traitement d'eaux usées contenant de l'ammonium

(43) Veröffentlichungstag der Anmeldung: 17.03.2010
(73) Patentinhaber: Demon GmbH, 8737 Gommiswald (CH)
(72) Erfinder:
(74) Vertreter: Scheffler, Jörg

(56) Entgegenhaltungen:
- EP-A- 0 383 674
- EP-A- 0 634 370
- EP-A- 0 949 206
- WO-A-00/05176
- WO-A-97/33839
- US-A- 2 337 507

## Beschreibung

Die Erfindung betrifft ein Verfahren zur Behandlung von ammoniumhaltigem Abwasser in einer einstufigen deammonifizierenden Ein-Becken-Anlage, bei welchem zunächst mittels aerob oxidierender Bakterien (AOB) Ammonium zu Nitrit umgesetzt wird und anschließend mittels anaerob oxidierender Bakterien (AMOX), insbesondere mittels Planctomyceten, Ammonium und Nitrit in elementaren Stickstoff umgesetzt werden, wobei bei dem Verfahren entstehender Überschussschlamm aus dem Becken abgeführt wird.

In herkömmlichen Kläranlagen wird heute fast ausschließlich die biologische Nitrifikation/Denitrifikation zur Stickstoffelimination eingesetzt. Unter Stickstoffelimination versteht man die Umwandlung von biologisch verfügbaren Stickstoffverbindungen wie Ammonium (NH₄), Nitrit (NO₂) und Nitrat (NO₃) zu elementarem Stickstoff (N₂), welcher als harmloses Endprodukt in die Umgebungsluft ausgast. Bei der Nitrifikation wird Ammonium durch Sauerstoff über das Zwischenprodukt Nitrit zu Nitrat oxidiert. Bei der anschließenden Denitrifikation wird das Nitrat in einem ersten Reduktionsschritt zu Nitrit und in einem zweiten Reduktionsschritt zu Stickstoff reduziert.

Die Deammonifikation ist ein effizientes Verfahren zur biologischen Stickstoffelimination bei Abwassem mit hohen Ammoniumkonzentrationen. Bei der einstufigen biologischen Deammonifikation mit suspendierter Biomasse sind zwei Bakteriengruppen beteiligt, einerseits die aerob Ammonium oxidierenden Bakterien (AOB), welche Ammonium zu Nitrit umsetzen, und andererseits die anaerob Ammonium oxidierenden und elementaren Stickstoff produzierenden Bakterien (AMOX), insbesondere Planctomyceten, welche diesen Schritt mit Hilfe des zuvor produzierten Nitrits vollziehen.

Die aerob Ammonium oxidierenden Bakterien (AOB) produzieren bezogen auf den Stoffumsatz 10-mal mehr neue Bakterienmasse als die anaerob Ammonium oxidierenden Bakterien (AMOX). Die Aufenthaltszeit des Schlamms im Ein-Schlamm-System bzw. in der Ein-Bekken-Anlage muss also mindestens so lang sein, dass sich die langsamwüchsigen anaerob Ammonium oxidierenden Bakterien (AMOX) anreichern können.

Ein Verfahren zur einstufigen biologischen Deammonifikation der eingangs genannten Art ist bereits aus der WO 2007/033393 A1 bekannt. Die EP 0 391 023 B1, die EP 0 327 184 B1 und die WO 00/05176 A1 beschreiben ebenfalls bereits Verfahren zur einstufigen bzw. zweistufigen Deammonifikation.

Als nachteilig erweisen sich hierbei insbesondere die wesentlich längeren Generationszeiten der anaerob Ammonium oxidierenden Bakterien (AMOX), welche um den Faktor 10 länger als die aerob Ammonium oxidierenden Bakterien (AOB) sind. Dadurch kann sich ein stabiles System nur dann ausbilden, wenn die Aufenthaltszeit des Schlamms bzw. der Bakterien im Becken ausreichend groß ist. Dies bedingt wiederum große Reaktionsvolumina und entsprechend ausgebildete Bekken.

Weiterhin ist eine ausreichend hohe Abwassertemperatur (> 25°C) Grundlage für die Existenz bzw. das Wachstum der anaerob Ammonium oxidierenden Bakterien (AMOX). Das Aufheizen des Abwassers ist energetisch jedoch sehr aufwändig, weshalb die beschriebenen Verfahren bei Abwässern mit niedrigen Temperaturen nicht wirtschaftlich einsetz- bzw. durchführbar sind.

Weiterhin erweist sich die Anwesenheit von solchen Bakteriengruppen (NOB) als nachteilig, welche das gebildete Nitrit unter aeroben Bedingungen in Nitrat umwandeln. Diese Gruppe Bakterien hat gegenüber den anaerob Ammonium oxidierenden Bakterien (AMOX) um den Faktor 10 kürzere Generationszeiten. Zum Ausgleich dieser unterschiedlichen Generationszeiten ist bereits daran gedacht worden, die belüftete Phase des Ein-Schlamm-Systems auf einem sehr niedrigen Sauerstoffniveau zu betreiben (< 0,4 mg O₂/l). Hierdurch steht den Nitrat bildenden Bakterien (NOB) kein bzw. wenig Sauerstoff zur Umsetzung des Nitrits zur Verfügung, was wiederum für die anaerob Ammonium oxidierenden Bakterien (AMOX) sehr vorteilhaft ist. Die reduzierte Sauerstoffzufuhr während der belüfteten Phase hat jedoch den Nachteil, dass auch die aerobe Umwandlung des Ammoniums in Nitrit sauerstofflimitiert ist und dadurch sehr langsam verläuft.

Der Erfindung liegt die Aufgabe zugrunde, ein verbessertes und wirtschaftlich durchführbares Verfahren zur Behandlung von ammoniumhaltigem Abwasser zur Verfügung zu stellen.

Diese Aufgabe wird mit einem Verfahren gemäß den Merkmalen des Anspruchs 1 gelöst. Die weitere Ausgestaltung des erfindungsgemäßen Verfahrens ist den Unteransprüchen zu entnehmen.

Erfindungsgemäß ist also ein Verfahren vorgesehen, bei welchem der abgeführte Überschussschlamm in eine schwere Phase, welche mehrheitlich die anaerob Ammonium oxidierenden Bakterien enthält (AMOX), und in eine leichte Phase separiert wird, wobei die schwere Phase in die Anlage zurückgeführt und die leichte Phase entsorgt wird. Dadurch dass die beiden Bakteriengruppen (aerob/anaerob) nicht wie bei anderen biologischen Abwasserreinigungssystemen im Flockenverbund auftreten und jeweils eine unterschiedliche Dichte aufweisen, kann der Überschussschlamm in eine schwere und eine leichte Phase getrennt werden. Die Planctomyceten (AMOX) wachsen sehr dicht mit einer Dichte von ca. 10¹⁰ Bakterien/ml. Durch die Entsorgung der leichten Phase und die Rückführung der schweren Phase in das Becken kann die langsamwüchsige Gruppe der anaerob Ammonium oxidierenden Bakterien (AMOX) angereichert werden. Der Anteil der anaerob Ammonium oxidierenden Bakterien (AMOX), welcher in einem Ein-Schlamm-System mit unspezifischem Überschussschlammabzug weniger als 10% der Biomasse ausmacht, kann durch das erfindungsgemäße Verfahren auf über 30% angehoben werden. Hierdurch kann das Reaktionsvolumen des Bekkens entsprechend verkleinert und die Prozessstabilität der Anlage gesteigert werden.

Die Temperatur des Abwassers, welche die Existenz bzw. das Wachstum der anaerob Ammonium oxidierenden Bakterien (AMOX) beeinflusst, ist durch das erfindungsgemäße Verfahren nicht mehr von entscheidender Bedeutung, sodass die Deammonifikation auch bei Abwasser mit einer Temperatur von ca. 15°C noch effektiv und prozesssicher angewendet werden kann.

Die Temperatur beeinflusst alle Bakterien mehr oder weniger in gleicher Weise (etwa eine Verdoppelung der Umsatzgeschwindigkeit je 10°C Temperaturerhöhung). Allerdings würde bei konventioneller Deammonifikation in einer Ein-Becken-Anlage bei niedrigen Temperaturen ein so großes Beckenvolumen erforderlich werden, dass es nicht mehr wirtschaftliCh wird. Der Rückhalt der AMOX durch das erfindungsgemäße Verfahren ermöglicht auch bei niedrigeren Temperaturen einen effizienten Prozess.

Durch die Rückführung der schweren Phase und die damit verbundene Anreicherung verschieben sich auch die Anteile der anaerob Ammonium oxidierenden Bakterien (AMOX) zu den Nitrat bildenden Bakterien (NOB) zu Gunsten der anaerob Ammonium oxidierenden Bakterien (AMOX). Hierdurch kann die belüftete Phase zu Beginn des Prozesses bei höheren Sauerstoffkonzentrationen betrieben werden (> 0,4 mg O₂/l) und die Effizienz der Nitritbildung durch die aerob Ammonium oxidierenden Bakterien (AOB) kann um den Faktor > 2 gesteigert werden.

Eine besonders vorteilhafte Weiterbildung des vorliegenden Verfahrens wird auch dadurch geschaffen, dass die Separierung des Überschussschlammes in eine schwere Phase und eine leichte Phase in einem Hydrozyklon durchgeführt wird. Durch einen Hydrozyklon, auch Fliehkraftabscheider genannt, lässt sich der Überschussschlamm besonders schnell und prozesssicher in eine schwere Phase, welche durch einen Unterlauf des Zyklons in das Becken zurückgeführt wird, und eine leichte Phase, welche durch den Oberlauf aus dem System abgeführt wird, trennen.

In einer alternativen Abwandlung des erfindungsgemäßen Verfahrens ist vorgesehen, dass die Separierung des Überschussschlamms in eine schwere Phase und eine leichte Phase in einer Zentrifuge durchgeführt wird Eine Zentrifuge separiert den Überschussschlamm unter Ausnutzung der Massenträgheit. Die schwere Schlammfraktion mit der höheren Dichte wandert aufgrund ihrer Trägheit nach außen und verdrängt die leichtere Schlammfraktion mit der geringeren Dichte in die Mitte der Zentrifuge.

Weiterhin ist es möglich, dass die Separierung des Überschussschlammes in eine schwere Phase und eine leichte Phase durch Sedimentation erfolgt. Hierbei erfolgt die Trennung des Überschussschlamms in ein schwere und eine leichte Phase unter dem Einfluss der Schwerkraft.

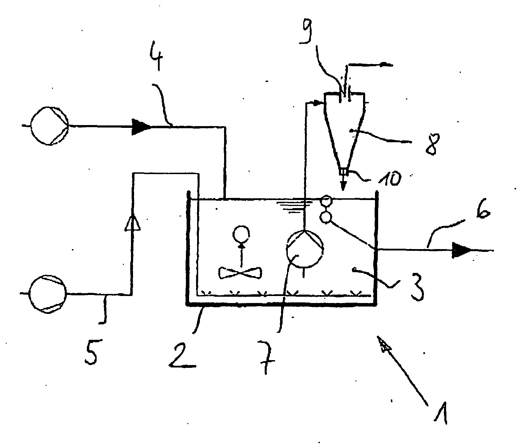

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in der einzigen Figur eine Seitenansicht einer Ein-Becken-Anlage zur Behandlung von ammoniumhaltigem Abwasser.

Die Figur zeigt eine Ein-Becken-Anlage 1 zur Behandlung von ammoniumhaltigem Abwasser 3. Die Ein-Becken-Anlage 1 weist ein Becken 2 zur Aufnahme des ammoniumhaltigem Abwassers 3, einen Zulauf 4, eine Belüftung 5 und einen Ablauf 6 auf. Das in dem Abwasser 3 enthaltene Ammonium wird mittels aerob oxidierender Bakterien (AOB) zunächst in Nitrit umgesetzt. Anschließend wird mittels anaerob oxidierender Bakterien (AMOX), insbesondere mittels Planctomyceten, das Ammonium und das zuvor umgesetzte Nitrit in elementaren Stickstoff umgesetzt. Mittels einer Pumpe 7 wird bei den Reaktionen entstehender Überschussschlamm in einen Hydrozyklon 8 eingeleitet. In dem Hydrozyklon 8 wird der Überschussschlamm in ein schwere Phase, welche mehrheitlich die anaerob Ammonium oxidierenden Bakterien (AMOX) enthält, und eine leichte Phase getrennt. Die leichte Phase wird durch den Überlauf 9 des Hydrozyklons 8 abgeführt und entsorgt und die schwere Phase wird durch den Unterlauf 10 des Hydrozyklons 8 zurück in das Becken 2 der Ein-Becken. Anlage 1 geführt.

## Patentansprüche

1. Verfahren zur Behandlung von ammoniumhaltigem Abwasser in einer einstufigen deammonifizierenden Ein-Becken-Anlage, bei welchem zunächst mittels aerob oxidierender Bakterien (AOB) Ammonium zur Nitrit umgesetzt wird und anschließend mittels anaerob oxidierender Bakterien (AMOX), insbesondere mittels Planctomyceten, Ammonium und Nitrit in elementaren Stickstoff umgesetzt werden, wobei bei dem Verfahren entstehender Überschussschlamm aus dem Becken abgeführt wird, **dadurch gekennzeichnet, dass** der abgeführte Überschussschlamm in eine schwere Phase, welche mehrheitlich die anaerob Ammonium oxidierenden Bakterien (AMOX) enthält, und in eine leichte Phase separiert wird, wobei die schwere Phase in die Anlage zurückgeführt wird.

2. Verfahren nach Anspruch 1, **dadurch gekennzeichnet, dass** die Separierung des Überschussschlamms in eine schwere Phase und eine leichte Phase in einem Hydrozyklon durchgeführt wird.

3. Verfahren nach den Ansprüchen 1 oder 2, **dadurch gekennzeichnet, dass** die Separierung des Überschussschlamms in eine schwere Phase und eine leichte Phase in einer Zentrifuge durchgeführt wird.

4. Verfahren nach zumindest einem der vorhergehenden Ansprüche, **dadurch gekennzeichnet, dass** die Separierung des Überschussschlamms in eine schwere Phase und eine leichte Phase durch Sedimentation erfolgt.

## Claims

1. Method for treating ammonium-containing wastewater in a single-stage deammonifying single-tank system in which ammonium is first converted to nitrite by means of aerobically oxidizing bacteria (AOB) and then ammonium and nitrite are converted to elemental nitrogen by means of anaerobically oxidizing bacteria (AMOX), in particular by means of Planctomycetes, wherein excess sludge formed in the method is removed from the tank, **characterized in that** the excess sludge removed is separated into a heavy phase which contains the majority of the anaerobically ammonium-oxidizing bacteria (AMOX) and a light phase, wherein the heavy phase is recirculated to the system.

2. Method according to Claim 1, **characterized in that** the excess sludge is separated in a hydrocyclone into a heavy phase and a light phase.

3. Method according to either Claim 1 or 2, **characterized in that** the excess sludge is separated in a centrifuge into a heavy phase and a light phase.

4. Method according to at least one of the preceding claims, **characterized in that** the excess sludge is separated by sedimentation into a heavy phase and a light phase.

## Revendications

1. Procédé de traitement d'une eau residuaire contenant de l'ammonium dans une installation à un bassin désammonifiante à une étape, selon lequel l'ammonium est tout d'abord transformé en nitrite au moyen de bactéries oxydantes aérobies (AOB), puis l'ammonium et le nitrite sont transformés en azote élémentaire au moyen de bactéries oxydantes anaérobies (AMOX), notamment au moyen de planctomycetes, la boue en excès formée pendant le procédé étant déchargée du bassin, **caractérisé en ce que** la boue en excès déchargée est séparée en une phase lourde, qui contient majoritairement les bactéries oxydant l'ammonium anaérobies (AMOX), et en une phase légère, la phase lourde étant recyclée dans l'installation.

2. Procédé selon la revendication 1, **caractérisé en ce que** la séparation de la boue en excès en une phase lourde et une phase légère est réalisée dans un hydrocyclone.

3. Procédé selon les revendications 1 ou 2, **caractérisé en ce que** la séparation de la boue en excès en une phase lourde et une phase légère est réalisée dans une centrifugeuse.

4. Procédé selon au moins l'une quelconque des revendications précédentes, **caractérisé en ce que** la séparation de la boue en excès en une phase lourde et une phase légère a lieu par sédimentation.
